# EUROPÄISCHE PATENTANMELDUNG

(11) **EP 4 124 761 A1**
(43) Veröffentlichungstag der Anmeldung: **01.02.2023**
(21) Anmeldenummer: 22020345.9
(22) Anmeldetag: 18.07.2022
(51) Int. Cl.: F16B 5/02, E04B 1/26, F16B 11/00, F16B 5/00

(54) **ANCHORING OF A STRUCTURE TO A SUPPORT**

(30) Priorität: 26.07.2021 AT 1292021
(71) Anmelder: SIHGA GmbH, 4694 Ohlsdorf (AT)
(72) Erfinder: Kaiser-Mühlecker, Benedikt, 4531 Kematen an der Krems (AT); Schauer, Robert, 4655 Vorchdorf (AT)

(57) **Zusammenfassung**

Die Erfindung betrifft die Verankerung eines Bauwerksteils (2) an einem ortsfesten Untergrund (1), wobei vom Untergrund (1) aus ein an diesem fixierter Bolzen (4) in eine nach unten hin offene Sacklochbohrung (6) in dem zu verankernden Bauwerksteil (2) hinein ragt und mit der Mantelfläche der Sacklochbohrung (6) verklebt ist, wobei ein Klebstoffkörper (5) innerhalb der Sacklochbohrung (6) einen Ringraum zwischen Bolzen (4) und der Mantelfläche der Sacklochbohrung (6) überbrückt und mit beidem durch Adhäsion verbunden ist. Die Mantelfläche der Sacklochbohrung (6) weist zumindest einen Volumenbereich (8) auf, welcher gegenüber der Öffnungsfläche der Sacklochbohrung (6) hinterschnitten angeordnet ist.

## Beschreibung

Die Erfindung betrifft eine Verankerung eines Bauwerksteils an einem ortsfesten Untergrund.

Durch die Veröffentlichungen DE 3325800 A1, DE 3718158 A1 und DE 3727154 A1 ist schon seit mehr als drei Jahrzehnten bekannt, ein Bohrloch in ortsfestem starrem Untergrund aus Stein oder Beton, in welchem durch Verklebung unter Anwendung eines Mörtels ein Bolzen zu fixieren ist, mit gegenüber der Öffnungsfläche des Bohrloches hinterschnittenen (also seitlich ausgebuchteten) Volumenbereichen auszubilden. Damit wird erreicht, dass jener aus ausgehärteter Mörtelmasse gebildete Körper, welcher den in das Bohrloch ragenden Bolzen unmittelbar umschließt, an den Wänden der Bohrung zusätzlich zum Kraftschluss auch noch durch Formschluss gegen Herausziehen aus dem Bohrloch gehalten wird. Der in das Bohrloch ragende Bolzen ist dabei mit lokalen Verbreiterungen versehen, welche in die hinterschnittenen Volumenbereiche des Bohrloches hineinragen, sodass auch ohne Mörtelmasse ein formschlüssiges Halten des Bolzens gegen rein lineares Herausziehen des Bolzens aus dem Bohrloch gegeben ist. Die Ausbildung des Bohrloches mit hinterschnittenen Volumenbereichen ist dabei dem Umstand geschuldet, dass eine verlässliche Verklebung des Untergrundmaterials mit der Mörtelmasse kaum zu garantieren ist, da die für das Verkleben relevanten Eigenschaften des Untergrundmaterials im Allgemeinen nicht festlegbar oder garantierbar sind, und da bei dem nach oben hin offenen Bohrloch unter Baustellenbedingen auch immer mit Verunreinigungen wie typischerweise Wasser und Bohrmehl gerechnet werden muss, welche die Verlässlichkeit der Verklebung mindern.

Die EP 3 623 547 A1 offenbart das Verankern eines Bauwerksteiles an einem ortsfesten Untergrund indem vom Untergrund aus ein an diesem fixierter Bolzen - welcher typischerweise durch eine Gewindestange mit einer aufgeschraubten Gewindemutter gebildet sein kann - in ein nach unten hin offenes kreiszylinderförmiges Sackloch in dem zu verankernden Bauwerksteil ragt und mit der Mantelfläche des Sackloches verklebt ist. Der Durchmesser des kreiszylinderförmigen Sackloches ist dabei deutlich größer bemessen als der Durchmesser des kleinstmöglichen denkbaren Kreiszylinders, welcher den in das Sackloch ragenden Bolzen einschließlich ggf. starr daran verankerter Teile umfasst. Damit wird erreicht, dass während der Montage nach dem Zusammenfügen die Position des Bauwerksteils gegenüber dem Untergrund noch in allen denkbaren Richtungen fein einjustiert werden kann, solange jene Klebstoffmasse, welche sich neben dem Bolzen im Sackloch befindet, noch nicht ausgehärtet ist.

Die Erfinder zur vorliegenden Anmeldung haben erkannt, dass bei der Verbindung gemäß der EP 3 623 547 A1 trotz der Umstände, dass sich das Sackloch am beweglichen Teil befindet und dieses nur nach unten hin offen ist, sodass es gut zu reinigen und gut von Verschmutzungen frei zu halten sein sollte, und dass das Material des zu verankernden Bauwerksteiles eindeutig und verlässlich festgelegt ist, ein unerwünscht hohes Restrisiko besteht, dass die Verklebung zwischen dem Bolzen und dem zu verankernden Bauwerksteil nicht ausreichend gut hält. Der übliche Weg ein derartiges Risiko beim Verkleben zu vermeiden ist die relevanten Rahmenbedingungen für die Verklebung wie insbesondere Oberflächenzustände, Temperaturen, Luftfeuchtigkeit, relative Bewegungslosigkeit der Teile während der Aushärtezeit sehr genau zu überwachen und sie verlässlich im gewünschten Bereich zu halten.

Die schon 1970 veröffentlichte DE 1802770 A1 offenbart eine Methode für das Befestigen einer Fassadenplatte an einem bolzenförmigen, von der tragenden Wand abstehenden Befestigungselement. Das Befestigungselement ragt in eine horizontal verlaufende Durchgangsbohrung in der Fassadenplatte hinein und ist mit der Mantelfläche der Durchgangsbohrung verklebt, wobei die Klebstoffmasse durch Kanäle im Befestigungselement hindurch eingebracht wird. Um die Haltewirkung der Verklebung zu erhöhen ist die Mantelfläche der Bohrung mit Ringnuten versehen, in welche die Klebstoffmasse eindringt sodass nach dem Aushärten der Klebstoffmasse auch eine formschlüssige Haltewirkung erreicht wird.

Die der Erfindung zu Grunde liegende Aufgabe besteht darin, bei der einjustierbaren Verankerung eines Bauwerksteils an einem Untergrund gemäß der EP 3 623 547 A1 das Risiko bezüglich fehlerhafter Verklebung zwischen Bolzen und Bauwerksteil zu verringern, ohne dafür den erforderlichen Aufwand für das Einhalten von Rahmenbedingungen für den Klebevorgang maßgeblich erhöhen zu müssen.

Für das Lösen der Aufgabe wird vorgeschlagen, schon vor Begin des Verankerungsvorganges, das nach unten hin offene Sackloch in dem zu verankernden Bauwerksteil mit Volumenbereichen auszubilden, welche gegenüber der Öffnungsfläche des Sacklochs hinterschnitten - also gegenüber der Öffnungsfläche seitlich ausgebuchtet - positioniert sind.

Durch diese Maßnahme wird erreicht, dass jener aus ausgehärteter Klebstoffmasse gebildete Körper, welcher den in das Sackloch ragenden Bolzen unmittelbar umschließt, sehr viel besser gegen Herausziehen aus dem Sackloch gehalten ist. Die Kontaktfläche zwischen dem Körper aus Klebstoffmasse und dem zu verankernden Bauteil weißt nämlich Flächenbereiche auf, welche zur Längsrichtung der Sacklochbohrung derart geneigt sind, dass an Ihnen durch Zugkraft, welche den Körper aus Klebstoffmasse aus dem Sackloch "herauszuziehen trachtet", der Körper aus Klebstoffmasse und das Material des zu verankernden Bauwerksteils aneinander gedrückt werden. Damit sind die beiden Bereiche nicht nur formschlüssig aneinander gehalten, es wird auch der Reibschluss verbessert. Die Konsequenz ist, dass die Verbindung auch dann gut hält, wenn die adhäsive Verbindung zwischen dem Klebstoffkörper und dem Material des zu verankernden Bauteils nicht so fest ist, wie sie bei optimalen Bedingungen wäre. Es ist damit leicht möglich die Geometrie der Klebefläche (Größe, Form, Ausrichtung) und die chemischen Parameter der Verklebung so einzustellen, dass die Verbindung auch bei nicht optimaler Arbeitsweise bei der Montage jedenfalls ausreichend sicher hält.

Die Erfindung wird anhand einer Zeichnung veranschaulicht:
- Fig. 1:: zeigt in seitlicher Teilschnittansicht die Teile einer beispielhaften vorteilhaften erfindungsgemäßen Verankerung.
- Fig. 2:: zeigt die Verankerung von Fig. 1 in seitlicher Teilschnittansicht in einem temporären Stadium während der Montage.

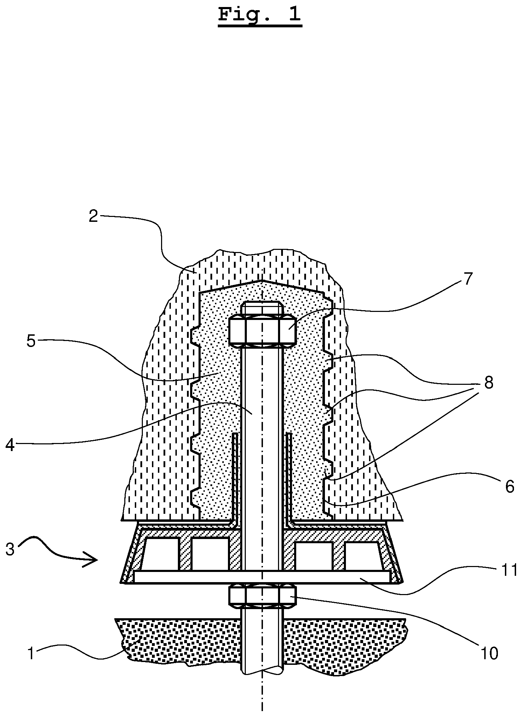

Das in Fig. 1 dargestellte Beispiel einer erfindungsgemäßen Verankerung zeigt einen ortsfesten Untergrund 1, typischerweise eine im Wesentlichen horizontale Betonfläche, einen oberhalb des Untergrundes 1 an diesem erfindungsgemäß verankerten Bauwerksteil 2, typischerweise eine hölzerne Säule oder eine hölzerne Wand eines Gebäudes sowie eine aus mehreren Einzelteilen bestehende Verbindungsvorrichtung 3.

Unbedingt notwendige Teile der Verbindungsvorrichtung 3 sind ein Bolzen 4 und ein Klebstoffkörper 5. Dabei ist der Bolzen 4 - wie auch immer - am Untergrund 1 starr verankert und ragt von unten her in eine zu dessen Unterseite hin offene Sacklochbohrung 6 in dem zu verankernden Bauwerksteil 2 hinein. Der Klebstoffkörper 5 besteht aus ausgehärteter Klebstoffmasse. Er befindet sich im Ringraum zwischen dem in der Sacklochbohrung 6 befindlichen Teil des Bolzens 4 und der Mantelfläche der Sacklochbohrung 6 und ist sowohl mit dem Bolzen 4 als auch der Mantelfläche der Sacklochbohrung 6 durch Adhäsion verbunden. Der Durchmesser des größtmöglichen denkbaren kreiszylinderförmigen Körpers, dessen Achse parallel zur Längsrichtung der Sacklochbohrung 6 ausgerichtet ist und der vollständig in der Sacklochbohrung 6 Platz findet, ist deutlich größer bemessen als der Durchmesser des kleinstmöglichen denkbaren Kreiszylinders, welcher den in das Sackloch ragenden Bolzen 4 einschließlich ggf. starr daran verankerter Teile - wie z.B. die an dem als Gewindestange ausgeführten Bolzen 4 aufgeschraubte Gewindemutter 7 - umfasst. Damit wird erreicht, dass während der Montage nach dem Zusammenfügen die Position des Bauwerksteils 2 gegenüber dem Untergrund 1 noch in allen denkbaren Richtungen fein einjustiert werden kann, solange jene Klebstoffmasse, welche später den Klebstoffkörper 5 bildet, noch nicht ausgehärtet ist.

Erfindungsgemäß ist vorgesehen, dass die Mantelfläche der Sacklochbohrung 6 zumindest einen Volumenbereich 8 aufweist, welcher gegenüber der Öffnungsfläche der Sacklochbohrung 6 hinterschnitten angeordnet ist. "Gegenüber der Öffnungsfläche der Sacklochbohrung 6 hinterschnitten angeordnet" bedeutet in diesem Zusammenhang, dass eine gerade Linie, welche normal zur Ebene der Öffnung der Sacklochbohrung 6 ausgerichtet ist und diese Ebene und den hinterschnitten angeordneten Volumenbereich verbindet, zumindest abschnittsweise durch Material des zu verankernden Bauteils 2 verlaufen muss, in welchem sich die Sacklochbohrung 6 befindet. Damit wird erzwungen, dass der Klebstoffkörper 5 in der Sacklochbohrung 6 formschlüssig dagegen gehalten ist, aus der Sacklochbohrung 6 in gerader Linie herausgezogen zu werden.

Gemäß einer besonders bevorzugten Bauweise ist der hinterschnitten angeordnete Volumenbereich 8 eine Gewindefurche in der Mantelfläche der Sacklochbohrung 6. Eine derartige Furche ist relativ einfach herstellbar, insbesondere dann, wenn das Material des zu verankernden Bauteils Holz oder ein Holzverbundwerkstoff ist. Selbstverständlich sind aber auch andere Formen für den Volumenbereich 8 möglich und es ist auch möglich mehr als einen derartigen Volumenbereich 8 je Sacklochbohrung 6 vorzusehen. Beispielsweise können sich kleinere Sacklochbohrungen in einem spitzen Winkel oder im rechten Winkel zu dieser von der ansonsten kreiszylindermantelförmigen Mantelfläche der großen Sacklochbohrung 6 aus in das Material des zu verankernden Bauwerksteils 2 hinein erstrecken. Beispielsweise könnte auch die ansonsten kreiszylindermantelförmige Mantelfläche der Sacklochbohrung eine oder mehrere koaxial zu ihr angeordnete ringförmige Erweiterungen aufweisen.

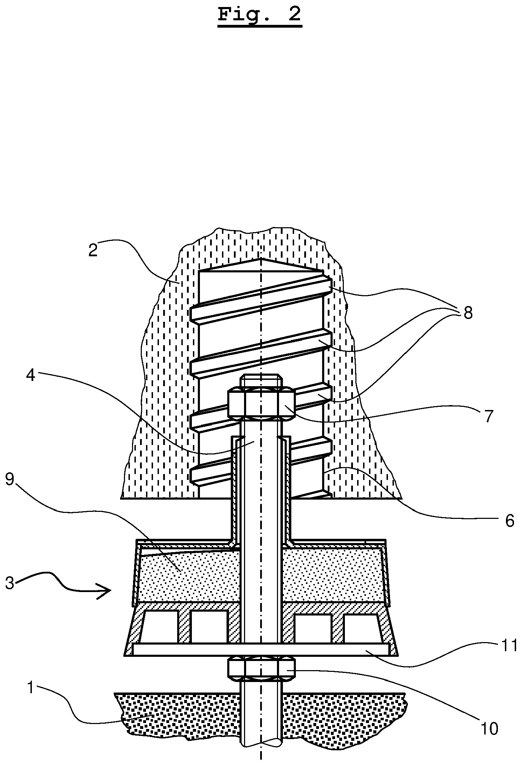

In dem in Fig. 1 und Fig. 2 dargestellten Beispiel ist die Verbindungsvorrichtung 3 gegenüber der am einfachsten denkbaren Ausführung in zweierlei Hinsicht besonders vorteilhaft weiterentwickelt. Diese Weiterentwicklungen sind schon in der oben erwähnten Schrift EP 3 623 547 A1 so detailliert beschrieben, dass es wohl ausreicht, hier nur kurz ihren Zweck zu erläutern:
Die erste dieser beiden Weiterentwicklungen betrifft ein Aufnahmevolumen für die noch formbare Klebstoffmasse 9 vor dem Vorgang des Verklebens von zu verankerndem Bauwerksteil 2 und Bolzen 4. Aus diesem Aufnahmevolumen heraus strömt bei der Montage die Klebstoffmasse 9 komfortabel und zuverlässig genau in den optimalen Bereich der Sacklochbohrung 6. Die zweite Weiterentwicklung betrifft eine Gewindemutter 10 an dem als Gewindestange ausgebildeten Bolzen 4 und einen von dieser Gewindemutter 10 getragenen Halteteller 11, über welche die Gewichtskraft von dem zu verankernden Bauwerksteil 2 auf den Bolzen 4 abgeleitet wird. Damit wird eine komfortable Möglichkeit geboten, die Höhe des zu verankernden Bauwerkteils 2 über dem Untergrund 1 stufenlos einstellen zu können. In der Kombination mit der erfindungsgemäßen Ausführung der Sacklochbohrung 6 werden damit sehr hoher Montagekomfort und sehr hohe Zuverlässigkeit der Verankerung mit sehr geringem wirtschaftlichem Aufwand erreicht.

## Patentansprüche

1. Verankerung eines Bauwerksteils (2) an einem ortsfesten Untergrund (1), wobei vom Untergrund (1) aus ein an diesem fixierter Bolzen (4) in eine nach unten hin offene Sacklochbohrung (6) in dem zu verankernden Bauwerksteil (2) hinein ragt und mit der Mantelfläche der Sacklochbohrung (6) verklebt ist, wobei der Durchmesser des größtmöglichen denkbaren kreiszylinderförmigen Hohlkörpers, dessen Achse parallel zur Längsrichtung der Sacklochbohrung (6) ausgerichtet ist und der vollständig in der Sacklochbohrung (6) Platz findet, größer ist als der Durchmesser des kleinstmöglichen denkbaren kreiszylinderförmigen Hohlkörpers, welcher den in die Sacklochbohrung (6) ragenden Längsbereich des Bolzens (4) umfassen kann, wobei ein Klebestoffkörper (5), welcher aus ausgehärteter Klebstoffmasse (9) besteht, den Spalt zwischen dem in der Sacklochbohrung befindlichen Längsbereich des Bolzens (4) und der Mantelfläche der Sacklochbohrung (6) überbrückt und mit beidem durch Adhäsion verbunden ist,
**dadurch gekennzeichnet, dass**
die Mantelfläche der Sacklochbohrung (6) zumindest einen Volumenbereich (8) aufweist, welcher gegenüber der Öffnungsfläche der Sacklochbohrung (6) hinterschnitten angeordnet ist.

2. Verankerung nach Anspruch 1, **dadurch gekennzeichnet, dass** an dem in die Sacklochbohrung (6) ragenden Längsbereich des Bolzens (4) ein Teil (7) anders als durch Kleben fixiert ist, wobei dieser Teil (7) durch die Sacklochbohrung (6) umfasst ist und von der Mantelfläche des Bolzens (4) seitlich vorspringt und wobei der Durchmesser des kleinstmöglichen denkbaren kreiszylinderförmigen Hohlkörpers, welcher imstande ist, den Teil (7) einschließlich den in die Sacklochbohrung (6) ragenden Längsbereich des Bolzens (4) zu umfassen, kleiner ist als der Durchmesser des größtmöglichen denkbaren kreiszylinderförmigen Hohlkörpers, dessen Achse parallel zur Längsrichtung der Sacklochbohrung (6) ausgerichtet ist und der vollständig in der Sacklochbohrung (6) Platz findet.

3. Verankerung nach einem der Ansprüche 1 oder 2, **dadurch gekennzeichnet, dass** der Durchmesser des größtmöglichen denkbaren kreiszylinderförmigen Hohlkörpers, dessen Achse parallel zur Längsrichtung der Sacklochbohrung (6) ausgerichtet ist und der vollständig in der Sacklochbohrung (6) Platz findet, mindestens 1,5 mal so groß ist wie der Durchmesser des kleinsten denkbaren kreiszylinderförmigen Hohlkörpers, welcher imstande ist, den in die Sacklochbohrung (6) ragenden Längsbereich des Bolzens (4) einschließlich des ggf. daran verankerten Teils (7) zu umfassen.

4. Verankerung nach einem der Ansprüche 1 bis 3, **dadurch gekennzeichnet, dass** der hinterschnitten angeordnete Volumenbereich (8) eine Gewindefurche in der Mantelfläche der Sacklochbohrung (6) ist.

5. Verankerung nach einem der Ansprüche 1 bis 3, **dadurch gekennzeichnet, dass** sich der hinterschnitten angeordnete Volumenbereich (8) ringförmig koaxial zu dieser um die Sacklochbohrung (2) herum erstreckt.

6. Verankerung nach einem der Ansprüche 1 bis 5, **dadurch gekennzeichnet, dass** der Bauwerksteil (2) eine Säule oder eine Wand eines Gebäudes ist und aus Holz oder einem Holzverbundwerkstoff besteht.
